# EUROPÄISCHE PATENTSCHRIFT

(11) **EP 0 954 986 B1**
(45) Veröffentlichungstag und Bekanntmachung des Hinweises auf die Patenterteilung: **17.11.2004**
(21) Anmeldenummer: 99108534.1
(22) Anmeldetag: 04.05.1999
(51) Int. Cl.: A23L 2/02, A23L 1/30, A23L 1/302, A23L 2/38, A23L 2/52

(54) **Getränk gegen oxidativen Stress**
Beverage against oxidative stress
Boisson contre le stress oxidatif

(30) Priorität: 08.05.1998 DE 19820680
(43) Veröffentlichungstag der Anmeldung: 10.11.1999
(73) Patentinhaber: Eckes-Granini GmbH & Co. Kommanditgesellschaft, D-55268 Nieder-Olm (DE)
(72) Erfinder: Dechent, Hans-Mario, 55291 Saulheim (DE); Gumpert, Anja, 55268 Nieder-Olm (DE); Simson, Ingrid, 55122 Mainz (DE)
(74) Vertreter: Lederer, Franz, Dr.

(56) Entgegenhaltungen:
- EP-A- 0 416 667
- WO-A-98/11789
- US-A- 5 464 619
- US-A- 5 681 569

## Beschreibung

Die Erfindung betrifft ein Getränk aus Pflanzenauszügen und - extrakten sowie weiteren üblichen Zutaten, das eine Kombination aus bestimmten Vitaminen und farblosen Polyphenolen umfaßt.

Die Förderung der Gesundheit ist eine aktive Funktion von Getränken, die bei vielen Menschen oder in bestimmten Situationen ein ausschlaggebendes Trinkmotiv sein kann. Dies ist vor allem bei solchen Getränken deutlich, die als sogenannte Gesundheitsgetränke einen besonderen Stellenwert besitzen, zum Beispiel Fruchtsäfte und Tee. Das Bedürfnis nach einer aktiven Förderung der Gesundheit kann unterschiedliche Grade besitzen und damit eine breite Skala gewünschter Getränkequalitäten abdecken. Vom bloß allgemein gesundheitsfördernden Getränk bis hin zu speziellen, medizinartigen Getränken sind viele Variationen denkbar, die überwiegend durch das Gesundheitsmotiv attraktiv werden. Andererseits kommt dem Bedürfnis nach Genuß ein immer größeres Gewicht zu und die Anforderungen an die Geschmacks- und Geruchseigenschaften der Getränke werden immer höher (Uhr: Alles über den Durst, Verlag Meininger 1980).

Zahlreiche Veröffentlichungen beschäftigen sich mit der Zunahme chronisch degenerativer Krankheiten wie Herz-Kreislauf-Erkrankungen und Krebs. In der Altersgruppe der 35-65-jährigen sind 31 % aller Todesursachen durch Herz-Kreislauf-Erkrankungen bedingt, etwa gleich hoch in dieser Altersgruppe ist der Anteil derer, die an Krebs sterben. Mit zunehmendem Alter kommt es zu einer deutlichen Verschiebung in der Todesursachenstatistik. Jenseits des 65. Lebensjahres nehmen die Herz-Kreislauf-Erkrankungen mit mehr als 50 % eine dominierende Stellung ein, wobei der Anteil derer, die an Krebs sterben, auf etwa 20 % zurückfällt. Aufgrund der Entwicklung der Alterspyramide kommt dabei den Herz-Kreislauf-Erkrankungen eine vorrangige Bedeutung zu, denn der Anteil der über 70-jährigen steigt in den nächsten 15 Jahren von gegenwärtig 12 % der Gesamtbevölkerung auf 20 % und damit um nahezu 70 %. Da Herz-Kreislauf-Erkrankungen im wesentlichen ernährungsbedingt sind, bekommt eine optimierte Ernährung eine vorrangige Bedeutung im Rahmen der Prävention dieser Erkrankungen. Die allseits bekannten Risikofaktoren wie Cholesterin, Bluthochdruck, Übergewicht, Diabetes und Rauchen kommen ursächlich für etwa 50 % der Herz-Kreislauf-Erkrankungen in Frage, so daß für die restlichen 50 % andere Ursachen eine Rolle spielen müssen.

Hier kommt den Mikronährstoffen eine herausragende Bedeutung zu, denn von den 13 Vitaminen sind mindestens 6 direkt in die pathophysiologischen Mechanismen der Arterioskleroseentstehung involviert.

Es ist bekannt, daß die antioxidativen Vitamine C und E gemeinsam dazu beitragen, den Anteil des oxidierten LDL-Cholesterin niedrig zu halten, womit sie der Entwicklung der Arteriosklerose vorbeugen. Es ist ebenfalls bekannt, daß drei weitere Vitamine an der Verhütung von Herz-Kreisrauf-Erkrankungen beteiligt sind, indem sie den Homocysteinblutspiegel senken.

Dabei handelt es sich um die drei B-Vitamine Folsäure, Vitamin B₆ und Vitamin B₁₂. Nachdem das Homocystein als unabhängiger und eigenständiger Risikofaktor der Arterioskleroseentstehung anerkannt wurde, verdient die Versorgung mit B-Vitaminen zunehmend Beachtung, zumal es bereits durch nutritive, d.h. relativ niedrige Dosen dieser B-Vitamine gelingt, den Homocysteinblutspiegel zu senken und damit das Risiko für Herz-Kreislauf-Erkrankungen zu reduzieren. Nach den einschlägigen Veröffentlichungen beruht der Beitrag des Homocysteins zur Arterioskleroseentstehung in seiner prooxidativen Wirkung und der damit einhergehenden negativen Beeinflussung des Blutgerinnungsverhaltens.

In der Vergangenheit wurde häufig versucht, für einzelne derartige Lebensmittelinhaltsstoffe eine isolierte Schutzwirkung experimentell zu beweisen. Wie sich zwischenzeitlich gezeigt hat, lassen sich die Schutzwirkungen jedoch nicht durch Einzelstoffe erzielen.

Fruchtsäfte gehören zu den Getränken mit hohem Genuß- und Gesundheitswert, deren Inhaltsstoffe in besonderem Maße zum körperlichen Wohlbefinden beitragen. Neben ihrem Gehalt an essentiellen Vitaminen und Mineralstoffen, verdauungsfördernden Fruchtsäuren und Ballaststoffen scheint eine Reihe von weiteren, in geringen Mengen in Früchten und den daraus hergestellten Säften enthaltenen Inhaltsstoffen für zusätzliche positive Wirkungen auf den menschlichen Organismus verantwortlich zu sein. Eine Vielzahl der in den letzten Jahren veröffentlichten Forschungsergebnisse enthält Hinweise, daß zwischen diesen auch als sekundäre Pflanzeninhaltsstoffe oder bioaktive Substanzen bezeichneten Komponenten und dem menschlichen Stoffwechsel sehr komplexe Zusammenhänge bestehen. Auf die Wirkung der sekundären Pflanzeninhaltsstoffe wird z.B. das sogenannte "French Paradoxon" zurückgeführt, d.h. die Tatsache, daß trotz einer verhältnismäßig fettreichen Ernährung die Häufigkeit von Herz-Kreislauf-Erkrankungen in Frankreich relativ niedrig ist. Dies wird damit begründet, daß bei regelmäßigem Rotweinkonsum durch die darin enthaltenen sekundären Pflanzeninhaltsstoffe ein Schutz vor diesen Erkrankungen bewirkt wird.

Bei den für die Schutzwirkung verantwortlichen Polyphenolen mit deutlich antioxidativem Potential handelt es sich um Phenolcarbonsäuren und deren Derivate, deren Bedeutung zur Prophylaxe von Herz-Kreislauf-Erkrankungen in vielen Veröffentlichungen beschrieben worden ist. So wird der Oxidation des LDL (Low Density Lipoprotein) durch im Organismus gebildete Sauerstoffradikale bei der Entstehung von Herz-Kreislauf-Erkrankungen eine wichtige Rolle zugesprochen (A. Rechner, C.-D. Patz, H. Dietrich: Beitrag zur Bewertung der antioxidativen Kapazität verschiedener Getränke, Flüss. Obst, 64 1997, 62-65). Polyphenole, d.h. unterschiedlichen Stoffklassen angehörende Verbindungen wie Hydroxyzimtsäuren, Catechine und Leucoanthocyanidine, Anthocyanidine, Flavanone, Flavone und Flavonole können durch ihre antioxidativen Eigenschaften und die Fähigkeit, schädliche Sauerstoffradikale abzufangen und unschädlich zu machen, die Oxidation des LDL verringern bzw. verhindern. Neben der antioxidativen Wirkung kommt ihnen noch eine gesonderte Schutzwirkung auf die Gefäßwand zu. Diese seit langem bekannte Schutzwirkung der Polyphenole hat z.B. dazu geführt, daß sie in Form von standardisierten Pflanzenextrakten arzneilich als Kardiaka verwendet werden, wobei deren antioxidative und gefäßprotektive Wirkung im Vordergrund steht. Darüber hinaus wird davon ausgegangen, daß Polyphenole zusätzliche Schutzwirkungen ausüben, deren nähere Aufklärung bisher jedoch noch am Beginn steht.

Die Bedeutung des Gehalts an sekundären Pflanzeninhaltsstoffen in pflanzlichen Rohstoffen, insbesondere der Gehalt in Früchten, Fruchtsäften, grünem und schwarzem Tee und den unter Mitverwendung dieser Produkte hergestellten Lebensmitteln und Getränken, wird in zahlreichen Veröffentlichungen behandelt. Unter der Bezeichnung "Functional Food" wird z.B. bereits seit Jahren vor allem in Japan und den USA, aber auch in Europa, eine neue Kategorie von Lebensmitteln und Getränken angeboten, die neben Zusätzen wie Ballaststoffen, Vitaminen, Mineralstoffen häufig auch einen Gehalt an sekundären Pflanzeninhaltsstoffen, insbesondere in Form von Grünteeextrakten aufweisen (C. Burke: Functional Foods and Drinks, The Market in Japan, International Food Ingredients, No. 2 (1995), 39-42).

Einige Veröffentlichungen offenbaren Getränke, die bestimmte Polyphenole umfassen. So beschreibt die EP 0 416 667 A1 Getränke mit stimulierender Wirkung, zusammengesetzt aus wenigstens 80 Gew.-% Wasser, wenigstens 0,05 % Flavanolen ausgewählt aus Catechin, Catechinderivaten, Epicatechin, Epicatechinderivaten und Gemischen hiervon sowie wenigstens 0,2 Gew.-% Aromastoffen. Die Flavanole können aus Grüntee oder anderen natürlichen Quellen stammen, wobei das Verhältnis von Coffein zu Flavanolen 1:1 bis 1:30 betragen kann. Als weitere Bestandteile können die Getränke Fruchtsaft, Süßungsmittel und Kohlendioxid enthalten.

Die US 5,681,569 beschreibt eine flüssige Zusammensetzung zur Verbesserung der zellulären Hydration und Trinkbarkeit, die 0,01-0,35% Flavanole, 0,01-0,3% Natriumionen, 0,005-0,08% Kaliumionen, 0,1-20% Kohlenhydrate und Wasser umfaßt.

Die US 5,464,619 beschreibt eine Zusammensetzung, vorzugsweise in Form eines Getränkes, das die zelluläre Hydration und Trinkbarkeit erhöht durch Kombination ausgewählter Mengen und Arten von Elektrolyten und Kohlenhydraten. Die flüssige Zusammensetzung umfaßt 0,01-0,35% an Flavanolen, 0,01-0,3% Natriumionen, 0,005-0,08% Kaliumionen, 0,05-10% Fructose, 0,05-10% Glucose und Wasser. Das Getränk kann gegebenenfalls 0,001-30% einer Aromakomponente und 0,01-0,04% Coffein oder 0,05-0,09% Chloridionen enthalten.

WO 98/11789 offenbart eine aus Pflanzen gewonnene, trockene Zusammensetzung für den menschlichen Verzcher, die Polyphenole enthält.

Es ist bekannt, daß Polyphenole und ihre primären Oxidationsprodukte zu den reaktivsten Verbindungen in Früchten und Gemüsen gehören. Bei der Getränkeherstellung und -lagerung unterliegen sie Veränderungen, die auf enzymatische und nichtenzymatische Reaktionen mit sich selbst und anderen Inhaltsstoffen zurückzuführen sind. Verschiedene Reaktionen der Polyphenole führen zu unerwünschten Farbveränderungen und sind z.B. für das Auftreten von Braunstichigkeit verantwortlich. Durch Kondensationsreaktionen entstehen irreversible, kovalente Bindungen, wobei mit zunehmendem Kondensationsgrad die Bräunung zunimmt und die Löslichkeit dieser Kondensationsprodukte sinkt. Das kann zu Instabilitäten und Trübungen führen.

Neben diesen durch Polyphenole in Getränken auf pflanzlicher Basis verursachten unerwünschten Bräunungen und Trübungen, z.B. Gerbstoff-, Gerbstoff-Eiweiß-, Metall-Gerbstoff- oder Stärke-Gerbstoff-Trübungen, können Polyphenole auch zu weiteren sensorischen Beeinträchtigungen wie Bitterkeit, Adstringenz und sogenanntem "Off-Flavour' führen. Bei der Herstellung von Säften werden daher in der Fruchtsaftindustrie häufig Behandlungs- und Klärungsverfahren zur Entfernung der Polyphenole und zur Vermeidung der durch sie verursachten Veränderungen angewandt.

Nach dem Stand der Technik sind bisher jedoch noch keine Getränke bekannt, die neben einem hohen Genußwert, eine Kombination bioaktiver Inhaltsstoffe spezifischer Wirksamkeit aufweisen.

Eine Aufgabe der vorliegenden Erfindung ist daher die Bereitstellung von stabilen Getränken, die gleichermaßen über einen hohen Genußwert und eine ausgeprägte Schutzwirkung verfügen und einen Beitrag zum Schutz gegen oxidativen Streß leisten können. Darüber hinaus besteht eine weitere Aufgabe der Erfindung darin, daß die Getränke bei möglichst geringem Energiewert eine möglichst hohe Inhaltsstoffdichte, d.h. einen möglichst hohen Gehalt an bioaktiven Substanzen bezogen auf den Energiewert aufweisen.

Überraschend wurde gefunden, daß neben der absoluten Höhe des antioxidativen Potentials vor allem das Verhältnis verschiedener Polyphenole zueinander in Kombination mit nutriven Dosen der Vitamine B₆, B₁₂ und Folsäure wesentlich zur Wirkung des erfindungsgemäßen Getränks beiträgt. Insbesondere die Verhältnisse an Hydroxyzimtsäuren und Flavonolderivaten jeweils zur Summe der farblosen Polyphenole spielen für die ernährungsphysiologische Wertigkeit des erfindungsgemäßen Getränks eine wichtige Rolle.

Die erfindungsgemäßen Getränke zeichnen sich u.a. durch einen kardioprotektiven und kollagenstabilisierenden Effekt aus und bei regelmäßigem Konsum ist eine signifikante Senkung des Homocysteinblutspiegels zu beobachten. Bedingt durch ihre hohe Inhaltsstoffdichte, d.h. ihren verhältnismäßig geringen Energiewert bezogen auf den Gehalt an bioaktiven Substanzen haben sie darüber hinaus den Vorteil, daß ihr Konsum nicht zu einer unerwünschten, hohen Kalorienzufuhr führt und damit gegebenenfalls Übergewicht begünstigt, das als eigenständiger Risikofaktor von Herz-Kreislauf-Erkrankungen gewertet werden muß.

Das erfindungsgemäße Getränk aus Pflanzenauszügen und/oder - extrakten sowie gegebenenfalls weiteren üblichen Zusätzen umfaßt somit eine Kombination aus folgenden Bestandteilen:
- 0,8-30 mg/100 kcal, vorzugsweise 1,5-15 mg/100 kcal Vitamin B₆
- 0,5-20 mcg/100 kcal, vorzugsweise 0,8-10 mcg/100 kcal Vitamin B₁₂
- 0,1-6,5 mg/100 kcal, vorzugsweise 0,2-3,5 mg/100 kcal Folsäure
- mindestens 10 mg/100 kcal, vorzugsweise 20-100 mg/100 kcal farblose Polyphenole und weist
- einen TEAC-Wert von 0,5-15
und ein Verhältnis der Summe der Hydroxyzimtsäuren, berechnet als Kaffeesäure, zur Summe der farblosen Polyphenole von 1:1 bis 1:20, vorzugsweise von 1:1,5 bis 1:10 und ein Verhältnis der Summe der Flavonolderivate, berechnet als Quercetin-3-glucosid, zur Summe der farblosen Polyphenole von 1:1 bis 1:20, vorzugsweise von 1:1 bis 1:10 auf.

Unter den genannten Verhältnissen werden vorliegend Gewichtsverhältnisse verstanden.

Bevorzugt umfaßt das erfindungsgemäße Getränk 20-50 g/100 kcal, vorzugsweise 25-35 g/100 kcal Gesamtextrakt, wobei unter Gesamtextrakt die Summe der gelösten Bestandteile verstanden wird.

Ebenfalls bevorzugt umfaßt das erfindungsgemäße Getränk 1,5-6 g/100 kcal, vorzugsweise 2,5-4,5 g/100 kcal Gesamtsäure, berechnet als Citronensäure, und weist einen pH-Wert von 3-4,5, vorzugsweise 3,5-4,3 auf.

Zur Erzielung eines harmonischen Süße-Säure-Verhältnisses können die erfindungsgemäßen Getränke z.B. Zitronensaft, Zitronensaftkonzentrat und/oder Genußsäuren, wie Zitronensäure, Äpfelsäure, Milchsäure oder Weinsäure enthalten, die einzeln oder in Mischung verwendet werden können.

An pflanzlichen Auszügen, Extrakten oder sonstigen pflanzlichen Bestandteilen umfaßt das erfindungsgemäße Getränk vorzugsweise 20-95 Gew.-%, besonders bevorzugt 25-60 Gew.-%.

Bei den zur Herstellung verwendeten pflanzlichen Auszügen, Extrakten oder sonstigen pflanzlichen Bestandteilen handelt es sich um wäßrige oder alkoholische Auszüge von Pflanzen oder Kräutern in flüssiger oder fester Form, Fruchtsäfte oder -konzentrate, Fruchtmark oder -konzentrate, Fruchtaromen, Gemüsesäfte oder -konzentrate, Gemüsemark oder -konzentrate, die einzeln oder in Mischung verwendet werden können.

Beispielsweise handelt es sich bei den Pflanzenauszügen um Apfelsaftkozentrat, Schlehensaftkonzentrat, Holundersaftkonzentrat, Quittensaftkonzentrat, Zitronensaftkonzentrat und roten Traubensaft. Pflanzliche Extrakte und Aromen können beispielsweise aus Hagebutten, Hibiscus, Äpfeln, grünem Tee, Waldbeeren, Holunderblüten, Minze, Mango, Banane, Limetten oder Zitronen gewonnen werden.

Das erfindungsgemäße Getränk kann als weitere übliche Zutaten beispielsweise Wasser, Süßungsmittel und Vitamine umfassen.

Als Süßungsmittel können erfindungsgemäß die in der Getränkeindustrie üblicherweise verwendeten Zucker, z.B. Saccharose, Glucose, Invertzuckersirup und Glucosesirup, Zuckeraustauschstoffe, wie Sorbit, Mannit, sowie Süßstoffe wie Aspartam, Acesulfam K Sucralose, Saccharin, Neohesperidin, Cyclamat und Thaumatin eingesetzt werden. Erfindungsgemäße Getränke werden vorzugsweise ohne Zusatz von Zucker hergestellt, um einen möglichst niedrigen Energiewert zu erreichen. Besonders geeignet ist die Verwendung von Mischungen der Süßstoffe Aspartam und Acesulfam K.

Erfindungsgemäße Getränke sind mit Vitaminen der B-Gruppe, insbesondere den Vitaminen B₆, B₁₂ und Folsäure in ernährungsphysiologisch relevanten Mengen angereichert. Darüber hinaus können auch Zusätze anderer Vitamine und Provitamine, z.B. der Vitamine C und E enthalten sein.

Unter dem TEAC-Wert (Trolox Equivalent Antioxidative Capacity) ist das gesamte antioxidative Potential zu verstehen. Zur Messung des TEAC-Wertes wird das künstliche, wasserlösliche Tocopherol "Trolox" (6-Hydroxy-2,5,7,8-tetramethylchroman-2-carbonsäure) als Bezugssubstanz verwendet.

Das Prinzip der Methode beruht auf der Verzögerung einer linear ansteigenden Farbreaktion von Metmyoglobin und ABTS (2,2'-Azinobis-(3-ethyl-benzothiazolin-6-sulfonsäure)) bei Zugabe von Wasserstoffperoxid. Das Metmyoglobin wirkt als Katalysator und bildet als sogenanntes Ferryl-Myoglobin in Interaktion mit dem entstehenden ABTS-Radikalkation einen Farbstoff, dessen Bildung bei Anwesenheit von Antioxidantien gehemmt wird.

Bei den als Hydroxyzimtsäuren zusammengefaßten phenolischen Verbindungen bzw. Polyphenolen handelt es sich um Mono- und Dihydroxy-Derivate der Zimtsäure, insbesondere um die Derivate der Kaffeesäure, der Cumarsäure, Chlorogensäure, Sinapinsäure und Ferulasäure; die Summe der farblosen Polyphenole umfaßt neben den Hydroxyzimtsäuren, Flavone, Flavonole, Flavanone, Flavanole, Procyanidine und Dihydrochalcone.

Die Bestimmung der farblosen Polyphenole erfolgt durch Auftrennung mittels HPLC (Hochleistungs-Flüssigchromatographie) und ihrer Detektion bei verschiedenen Wellenlängen mit einem Diodenarray-Detektor.

Die Aufbereitung der Proben erfolgt in mehreren Schritten:
- Dimethylformamid (DMF)-Aufarbeitung für Proben, die Flavanonglucoside enthalten:
   10 ml des erfindungsgemäßen Getränks werden mit 10 ml Dimethylformamid (DMF) und 10 ml einer frisch bereiteten Lösung von 3,55 g Ammoniumoxalat in einem Liter Wasser versetzt. Anschließend wird 10 min bei 90°C in einem Wasserbad erhitzt. Die abgekühlte Lösung wird dann mit Wasser auf 50 ml aufgefüllt.
- Methanolextraktion von trüben, d.h. Fruchtfleischpartikel enthaltenden Säften:
   10 ml Getränk werden mit 20 ml Methanol versetzt und 1 Stunde kräftig gerührt.
- Festphasenextraktion an einer C18-Phase:
   Die klaren bzw. geklärten Getränke werden durch Festphasenextraktion in eine neutrale und in eine saure Fraktion geteilt. Hierzu wird die C18-Phase (500 mg) mit je 20 Bettvolumen Methanol und 20 Bettvolumen Wasser (pH 6) -neutrale Kartusche - bzw. 0,5 %ige Essigsäure (pH 2) - saure Kartusche - vorkonditioniert. 2 ml Getränkeprobe werden nun auf die neutrale Kartusche gegeben, mit 5 ml Wasser nachgewaschen und das Eluat zusammen mit dem Waschwasser nach Einstellen des pH-Werts auf pH 2 (mit HCl) quantitativ auf die saure Kartusche gegeben. Es wird nun mit 5 ml 0,5 %iger Essigsäure gewaschen. Die an den Kartuschen adsorbierten Polyphenole werden mit je 5 ml Methanol eluiert. Die Eluate werden bei 35°C im Stickstoffstrom eingedampft. Mit je 2 ml Wasser/Methanol 2/8 v/v werden die Rückstände aufgenommen.
- Fraktionierung an Polyamid:
   Eine Glassäule (250x27 mm) wird bis zu einer Füllhöhe von 100 mm mit in Methanol vorgequollenem Polyamid (SC-6, Macherey-Nagel, Düren) gefüllt. Mit Wasser wird methanolfrei gewaschen. Nach Aufgabe von 20 ml Saft wird mit 150 ml Wasser nachgewaschen. Die neutrale Fraktion wird mit 300 ml Methanol eluiert, wohingegen die saure Fraktion mit 300 ml Methanol/Ameisensäure 98,5/1,5 w/w eluiert wird. Die Eluate werden bei 35°C schonend eingeengt und mit Wasser auf einen Methanolgehalt von ca. 20% gebracht.
- Kationentauscheraufarbeitung zur Abtrennung störender Anthocyane:
   In eine kleine Glassäule werden 2 ml Kationenaustauscher (H⁺-Form / Dowex 50 WX4, 50-100mesh) eingefüllt. 10ml geklärtes Getränk bzw. klare Fraktion werden aufgegeben. Die ersten Milliliter werden verworfen und nur die restlichen ca. 2/3 werden weiterverwendet.

Die so aufbereiteten Säfte werden vor der HPLC-Injektion membranfiltriert (0,2 µm-Filter).

### HPLC-Bedingungen:

HPLC-Anlage mit Diodenarray-Detektor, Gradientenpumpe und Säulenofen, Säule: LiChrospher RP18 5µm 250x4,6mm + 10x4mm, Vorsäule mit gleichem Material, Säulentemperatur 40°C, Anfangsdruck bei Gradientenstart ca. 120bar,
Eluent A: 40mM Ameisensäure in Wasser,
Eluent B: 40mM Ameisensäure/Methanol, Fließgeschwindigkeit: 1 ml/min.

Die Detektion der verschiedenen Gruppen farbloser phenolischer Verbindungen erfolgt bei folgenden Wellenlängen:

| | |
|---|---|
| Hydroxyzimtsäuren | 325 nm |
| Flavone | 315 nm |
| Flavonole | 355 nm |
| Flavanone | 284 nm |
| Flavanole, Procyanidine | 278 nm |
| Dihydrochalcone | 284 nm |

Die vorliegende Erfindung umfaßt auch ein Verfahren zur Herstellung eines oben beschriebenen Getränks, worin die Zutaten gemischt und mit Wasser auf die gewünschte Konzentration verdünnt werden und das erhaltene Getränk entgast, pasteurisiert und in geeignete Gebinde, z.B. Flaschen abgefüllt wird.

Die nachfolgenden Beispiele dient der weiteren Erläuterung der Erfindung:

### Beispiel 1

Zur Herstellung von 10.000 Litern eines erfindungsgemäßen Getränkes werden 842 kg einer Mischung aus Apfelsaft-, Schlehensaft-, Holundersaft- und Zitronensaftkonzentrat, 0,9 kg einer Mischung aus Aspartam und Acesulfam K, 1 kg einer Mischung der Vitamine B₆, B₁₂ und Folsäure, 60 kg einer Mischung pflanzlicher Extrakte und Aromen aus Hagebutten, Hibiscus, Äpfeln, grünem Tee und Waldbeeren mit entmineralisiertem, entgastem Wasser auf 10.000 Liter ergänzt. Das entgaste Wasser weist einen Restsauerstoffgehalt von <0,5, vorzugsweise <0,2 mg/l auf. Die Herstellung erfolgt derart, daß das erhaltene Gemisch vorzugsweise auf 50-55°C erhitzt und unter Aromarückführung im Vakuum (z.B. 120-150 mbar) entgast wird, wobei das Aromakondensat nach dem Injektorprinzip kontinuierlich wieder in den Produktstrom eingespeist wird. Im Anschluß an die nachfolgende, zur Haltbarmachung erforderliche Kurzzeiterhitzung (z.B. 85 bis 90°C, Heißhaltezeit ca. 10-15 Sekunden) wird das heiße Getränk direkt zur Füllmaschine geleitet, in geeignete Gebinde, z.B. Flaschen abgefüllt und im Rückkühler auf Temperaturen von ca. 20°C abgekühlt. Erfindungsgemäße Getränke können auch kaltsteril abgefüllt werden, d.h. das zur Pasteurisation rasch hocherhitzte Produkt wird im Wärmeaustauscher auf ca. 20°C rückgekühlt und mit dieser Temperatur in sterile Gebinde abgefüllt.

Das auf diese Weise hergestellte Getränk weist folgende Kennzahlen auf:

| | |
|---|---|
| Gesamtextrakt: | 29,5 g/100 kcal |
| Gesamtsäure, berechnet als Citronensäure | 1,75 g/100 kcal |
| pH-Wert | 3,8 |
| Vitamin B₆ | 2,7 mg/100 kcal |
| Vitamin B₁₂ | 0,98 mcg/100 kcal |
| Folsäure | 0,35 mg/100 kcal |
| TEAC-Wert | 1 |
| farblose Polyphenole | 34,5 mg/100 kcal |
| Fruchtgehalt | 51 Gew.-% |
| Hydroxyzimtsäuren:farblosen Polyphenole | 1:1,3 |
| Flavonolderivate:farblosen Polyphenole | 1:7,4 |

### Beispiel 2

Zur Herstellung eines weiteren erfindungsgemäßen Getränks werden 816,75 kg einer Mischung aus rotem Traubensaft, Apfelsaft-, Holundersaft- und Zitronensaftkonzentrat, 36,25 kg einer Mischung pflanzlicher Aromen und Extrakte aus Hagebutten, Holunderblüten und Äpfeln, 0,45 kg einer Mischung aus Aspartam und Acesulfam K und 0,8 kg einer Mischung der Vitamine B₆, B₁₂ und Folsäure mit entmineralisiertem und entgastem Wasser auf 5.000 Liter ergänzt. Herstellung und Abfüllung erfolgen wie bei Beispiel 1 beschrieben.

### Beispiel 3

432,3 kg einer Mischung aus Zitronensaft-, Quittensaft- und Apfelsaftkonzentrat werden mit 18,475 kg einer Mischung aus Aromen und Extrakten von Minze, Mango, Banane, Limetten, grünem Tee, Zitronen und Äpfeln, 0,45 kg einer Mischung aus Aspartam und Acesulfam K sowie 1,0 kg einer Mischung der Vitamine B₆, B₁₂ und Folsäure mit entmineralisiertem und entgastem Wasser auf 5.000 Liter ergänzt. Die Mischung wird wie in Beispiel 1 beschrieben hergestellt und abgefüllt.

## Patentansprüche

1. Getränk aus Pflanzenauszügen und/oder -extrakten sowie gegebenenfalls weiteren üblichen Zutaten, wobei das Getränk eine Kombination aus folgenden Bestandteilen umfaßt:
0,8-30 mg/100 kcal Vitamin B₆,
0,5-20 mcg/100 kcal Vitamin B₁₂,
0,1-6,5 mg/100 kcal Folsäure und
mindestens 10 mg/100 kcal farblose Polyphenole und das Getränk
einen Trolox Equivalent Antioxidative Capacity-Wert von 0,5-15,
ein Verhältnis der Summe der Hydroxyzimtsäuren, berechnet als Kaffeesäure, zur Summe der farblosen Polyphenole von 1:1 bis 1:20 und
ein Verhältnis der Summe der Flavonolderivate, berechnet als Quercetin-3-glucosid, zur Summe der farblosen Polyphenole von 1:1 bis 1:20 aufweist.

2. Getränk nach Anspruch 1, das 20-50 g/100 kcal Gesamtextrakte umfaßt.

3. Getränk nach einem der vorhergehenden Ansprüche, das 1,5-6 g/100 kcal Gesamtsäure, berechnet als Citronensäure, umfaßt.

4. Getränk nach einem der vorhergehenden Ansprüche, das einen pH-Wert von 3-4,5 aufweist.

5. Getränk nach einem der vorhergehenden Ansprüche, das 20-95 Gew.-% pflanzliche Auszüge, Extrakte oder sonstige pflanzliche Bestandteile umfaßt.

6. Getränk nach einem der vorhergehenden Ansprüche, das als weitere Bestandteile Wasser, Vitamine und/oder Süßungsmittel umfaßt.

7. Getränk nach einem der vorhergehenden Ansprüche, das als Pflanzenauszüge Apfelsaftkonzentrat, Schlehensaftkonzentrat, Holundersaftkonzentrat, Zitronensaftkonzentrat, Quittensaftkonzentrat und/oder roten Traubensaft umfaßt.

8. Getränk nach einem der vorhergehenden Ansprüche, das eine Mischung aus pflanzlichen Extrakten und Aromen aus Hagebutten, Hibiscus, Äpfeln, grünem Tee, Waldbeeren, Holunderblüten, Minze, Mango, Banane, Limetten und/oder Zitronen umfaßt.

9. Verfahren zur Herstellung eines Getränks nach einem der Ansprüche 1-8, worin die Zutaten gemischt und mit Wasser auf die gewünschte Konzentration verdünnt werden und das erhaltene Gemisch entgast, pasteurisiert und in geeignete Gebinde abgefüllt wird.

## Claims

1. A beverage from vegetable essences and/or extracts as well as, where appropriate, further usual ingredients, wherein the beverage comprises a combination of the following components:
0.8-30 mg/100 kcal vitamin B₆,
0.5-20 mg/100 kcal vitamin B₁₂,
0.1-6.5 mg/100 kcal folic acid and
at least 10 mg/100 kcal colorless polyphenols, and the beverage has
a Trolox Equivalent Antioxidative Capacity value of 0.5-15,
a ratio of the total of the hydroxycinnamic acids, calculated as coffee acid, to the total of colorless polyphenols of 1:1 to 1:20 and
a ratio of the total of the flavonol derivatives, calculated as quercetin-3-glucosid, to the total of colorless polyphenols of 1:1 to 1:20.

2. The beverage according to claim 1, which comprises 20-50 g/100 kcal of total extracts.

3. The beverage according to any of the preceding claims, which comprises 1.5-6 g/100 kcal total acid, calculated as citric acid.

4. The beverage according to any of the preceding claims, which has a pH of 3-4.5.

5. The beverage according to any of the preceding claims, which comprises 20-95 wt.-% vegetable essences, extracts or further vegetable components.

6. The beverage according to any of the preceding claims, which comprises as further components water, vitamins and/or sweeteners.

7. The beverage according to any of the preceding claims, which comprises as vegetable essences apple juice concentrate, blackthorn juice concentrate, elder juice concentrate, lemon juice concentrate, quince juice concentrate, and/or red grape juice.

8. The beverage according to any of the preceding claims, which comprises a mixture of vegetable extracts and flavors from rose hip, hibiscus, apples, green tea, wild berries, elder blossoms, mint, mango, banana, limes and/or lemons.

9. A process for the preparation of a beverage according to any of claims 1-8, wherein the ingredients are mixed and are diluted with water until the desired concentration is achieved, and the resulting mixture is degased, pasteurized and filled into appropriate containers.

## Revendications

1. Boisson à base d'extraits et/ou de concentrés de plantes et éventuellement d'autres additifs habituels, la boisson comprenant une combinaison des composants suivants :
0,8 mg/100 kcal à 30 mg/100 kcal de vitamine B6,
0,5 mcg/100 kcal à 20 mcg/100 kcal de vitamine B12,
0,1 mg/100 kcal à 6,5 mg/100 kcal d'acide folique et
au moins 10 mg/100 kcal de polyphénols incolores, et la boisson présente
une valeur de capacité anti-oxydante Trolox-équivalente de 0,5 à 15,
un rapport de la somme des acides hydroxycinnamiques, exprimés en tant qu'acide caféique, par rapport à la somme des polyphénols incolores de 1:1 à 1:20 et
un rapport de la somme des dérivés de flavonol, exprimés en tant que 3-glucoside de quercétine, par rapport à la somme des polyphénols incolores de 1:1 à 1:20.

2. Boisson selon la revendication 1, qui comprend 20 g/100 kcal à 50 g/100 kcal d'extraits totaux.

3. Boisson selon l'une quelconque des revendications précédentes qui comprend 1,5 g/100 kcal à 6 g/100 kcal d'acide total, exprimé en tant qu'acide citrique.

4. Boisson selon l'une quelconque des revendications précédentes qui présente un pH de 3 à 4,5.

5. Boisson selon l'une quelconque des revendications précédentes qui comprend 20% à 95 % en poids de concentrés végétaux, d'extraits végétaux ou d'autres composants végétaux.

6. Boisson selon l'une quelconque des revendications précédentes qui comprend, en tant que composants supplémentaires, de l'eau, des vitamines et/ou des édulcorants.

7. Boisson selon l'une quelconque des revendications précédentes qui comprend, en tant que concentrés de plantes, un concentré de jus de pomme, un concentré de jus de prunelle, un concentré de jus de sureau, un concentré de jus de citron, un concentré de jus de coing et/ou du jus de raisin rouge.

8. Boisson selon l'une quelconque des revendications précédentes qui comprend un mélange d'extraits et d'arômes végétaux d'églantier, d'hibiscus, de pommes, de thé vert, de baies de la forêt, de fleurs de sureau, de menthe, de mangue, de banane, de limettes et/ou de citrons.

9. Procédé de production d'une boisson selon l'une quelconque des revendications 1 à 8, dans lequel on mélange les ingrédients et on les dilue dans de l'eau jusqu'à la concentration souhaitée, on dégaze le mélange obtenu, on le pasteurise et on le conditionne dans des récipients appropriés.
